# EUROPEAN PATENT SPECIFICATION

(11) **EP 0 444 807 B1**
(45) Date of publication and mention of the grant of the patent: **24.08.1994**
(21) Application number: 91301280.3
(22) Date of filing: 18.02.1991
(51) Int. Cl.: C08G 73/06, C08G 61/12

(54) **Polyquinoxaline compositions and their method of preparation**
Polyquinoxalinmischungen und Verfahren zu deren Herstellung
Compositions de polyquinoxaline et leur méthode de préparation

(30) Priority: 21.02.1990 US 482459
(43) Date of publication of application: 04.09.1991
(73) Proprietor: EXXON RESEARCH AND ENGINEERING COMPANY, Florham Park, New Jersey 07932-0390 (US)
(72) Inventor: Chiang, Long Yong, Somerset, New Jersey 08873 (US); Swirczewski, John Willard, Kintnersville, Pennsylvania 18930 (US)
(74) Representative: Fletcher Watts, Susan J.

(56) References cited:
- EP-A- 0 299 452
- US-A- 4 727 135
- DATABASE WPIL, no 81-24848, DERWENT PUBLICATIONS Ltd., LONDON, GB;

## Description

The present invention relates to novel polymers having repeating quinoxaline and substituted quinoxaline moieties.

### BACKGROUND OF THE INVENTION

Polyaromatic compounds are of considerable interest because of their oxidative stability, thermal stability and, in some instances, their interesting electrical properties. Among the polyaromatic compounds, poly (phenylquinoline) and its derivatives are generally the most thermal oxidative stable polyaromatic polymers.

In U.S. Patent 4,727,135 a polymer consisting essentially of recurring non-substituted polyquinoline moieties was reported. The non-substituted polyquinoline compound, as well as certain substituted polyquinoline compounds, was disclosed as being prepared by the catalytic dehydrogenative polymerization of tetra-hydroquinoline and certain organo-substituted hydroquinoline derivatives.

Other heterocyclic containing polymers that have been investigated because of their potential utility in applications which demand high thermal and oxidative stability are the so-called polyquinoxalines and poly (phenylquinoxalines). (See Hergenrother, Paul M., J. Macromol. Sci.-Revs. Macromol. Chem., C6(1), 1-28 (1971)) These polymers are formed, for example, by the condensation reaction between bis (o-diamines), such as 3,3'- diaminobenzidine (1) with aromatic bis-glyoxals, such as p, p'-oxybis(phenyleneglyoxal hydrate) (2) as shown in Equation 1 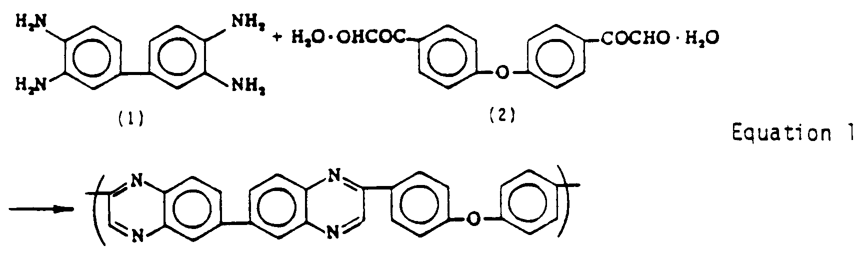
and by the condensative reaction of an aromatic bis(o-diamine) and dibenzils, such as p, p'-oxydibenzil (3), such as shown in Equation 2 below: 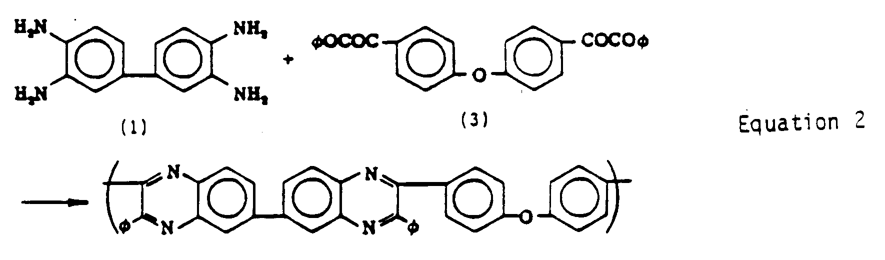
Other variations have been recorded in the Hergenrother reference. In all instances, however, the repeating unit in the polymer does not consist solely of quinoxaline or substituted quinoxaline moieties but, instead, they consist of moieties including a quinoxaline unit linked to some other structural unit such as phenyl ether, and the like.

According to one aspect, the present invention provides a polymer having the formula: 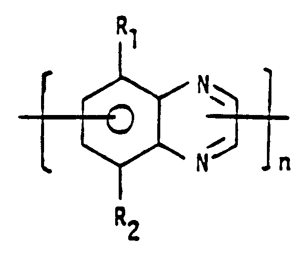
wherein R₁ and R₂ may be the same or different and are selected from hydrogen, alkyl, aryl, aralkyl and alkylaryl groups and wherein n is an integer ≧ 2.

These new polymers have utility in polymer applications requiring thermal and oxidative stability, such as in high temperature structural, electronic, and nonlinear optical materials usage.

Preferably the alkyl, aryl, aralkyl and alkaryl groups each have up to 30 carbon atoms. More preferably, each alkyl group will have 1 to 24 carbon atoms. In one embodiment, both R₁ and R₂ are H. Preferably, n is an integer of from 2 to 30.

As stated above, the substituents R₁ and R₂ may be the same or different and are selected from alkyl, aryl, alkaryl and aralkyl groups, typically having no more than 30 carbon atoms. Preferably, when an alkyl group, it will preferably have from 1 to 24, more preferably from 1 to 20, carbon atoms. When aryl, there will typically be 6 to 30 carbon atoms. For example, if the aryl group is an alkyl substituted aryl group, it would have alkyl groups of from 1 to 24 carbon atoms. In other words, if the organo group is aralkyl or alkaryl, it will have from 7 to 30 carbon atoms.

According to another aspect, the invention provides a method for preparing the above-defined polymers, which method comprises contacting a 1,2,3,4-tetrahydroquinoxaline compound of the formula 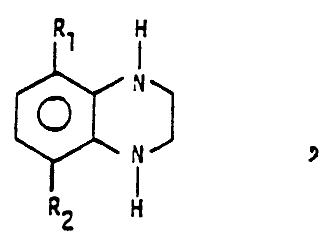
where R₁ and R₂ are as defined, with a transition metal sulfide catalyst at a temperature and for a time sufficient for the dehydrogenative polymerization of the 1,2,3,4-tetrahydroquinoxaline compound to occur.

The polymerization of 1,2,3,4-tetrahydroquinoxaline or said substituted 1,2,3,4-tetrahydroquinoxaline is conducted by contacting the tetrahydroquinoxaline compound with the transition metal sulfide while heating them at temperatures, generally above about 180°C, and for a time sufficient to result in the formation of the polymer. Indeed, in the practice of the present invention, heating the 1,2,3,4-tetrahydroquinoxaline compound and catalyst is conducted generally in the range of 180°C to 300°C and preferably in the range of 250°C to 280°C. The time of contacting and heating depends, of course, upon the specific tetrahydroquinoxaline compound employed, the catalyst used and the temperature selected. As a general guide, however, at temperatures of 250°C to 280°C, contact tunes are of the order of 12 to 96 hours.

As between 1,2,3,4-tetrahydroquinoxaline and a said substituted 1,2,3,4-tetrahydroquinoxaline, the 1,2,3,4-tetrahydroquinoxaline is the preferred starting material in the practice of the present invention.

The catalysts employed in the process of the present invention are selected from transition metal sulfide catalysts in which the transition metal is preferably selected from the group consisting of transition metals of Groups VIB, VIIB and VIII of the Periodic Table (see The Merck Index, 9th Edition, Merck & Company, Inc., Rahway, New Jersey) and mixtures thereof. Rhenium sulfide, ruthenium sulfide and rhodium sulfide are particularly preferred catalysts. Indeed, suitable rhenium suilfide catalysts may be prepared as described in U.S. Patent 4,308,171.

In another aspect of the invention, the polyquinoxaline compounds may be converted to novel quaternary ammonium compounds by interaction with alkylating agents, especially aralkyl benzyl halides, α,α'-dihaloxylenes, dialkyl sulfates, dialkoxy carbonium salts and trialkyl oxonium salts like: 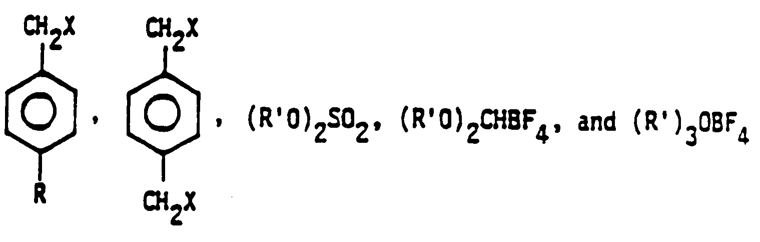
wherein X is chlorine, bromine or iodine, R is hydrogen or an alkyl group having from 1 to 20 carbon atoms and R' is an alkyl group having from 1 to 20 carbon atoms.

The novel quaternary polyquinoxalinium salts are represented by the formula: 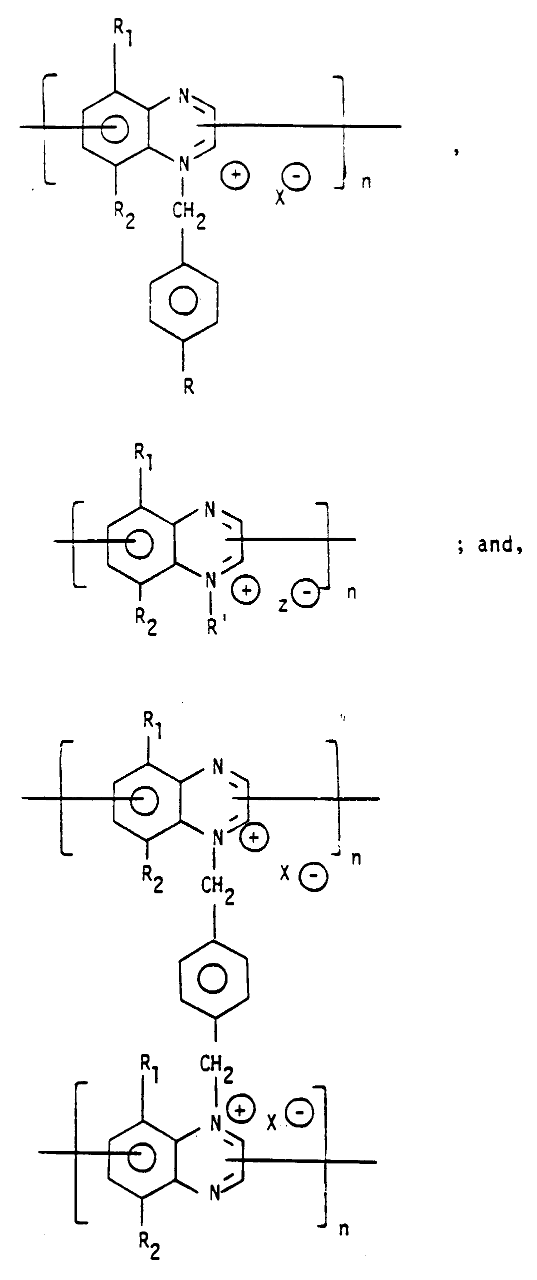
wherein n is an integer ≧ 2, R₁ and R₂ may be the same or different and are selected from hydrogen, alkyl, aryl, aralkyl and alkaryl groups, R' is an alkyl group of from 1 to about 20 carbon atoms, x⁻ is a chloride, bromide or iodide and z⁻ is an anion selected from R'SO₄⁻, BF₄⁻, ClO₄⁻ and PF₆⁻.

Preferably R' is methyl and z⁻ is CH₃SO₄⁻.

The quaternary polyquinoxalinium salts are useful as metal corrosion inhibitors.

The invention is illustrated by the following Examples.

### Examples

In the examples which follow, all of the chemical reactants were commercially available compounds that were used as received.

### A. The General Procedure for the Synthesis of 1,2,3,4-Tetrahydroquinoxaline Compounds

The synthesis of 1,2,3,4-tetrahydroquinoxaline compounds has been reported in J.Organ. Chem., 24, 205 (1959). A modified version of that procedure was employed herein.

Basically, a 500 ml, three-necked flask was charged with lithium aluminum hydride (300 ml, 1M in THF, 300 mmol) under a inert atmosphere. To the lithium aluminum hydride was added 2-keto-1,2-dihydroquinoxaline (22g, 0.15 mol) in dry THF (100 ml) in small portions to prevent a sharp rise of temperature. After the addition was complete, the mixture was heated at the refluxing temperature of THF for 4 hours. The excess lithium aluminum hydride was decomposed by a slow addition of ethylacetate (10 ml) at room temperature. The resulting mixture was dropped slowly into ice water and extracted with diethyl ether. The diethyl ether solution was dried over anhydrous MgSO₄, filtered and the solvent evaporated to give a yellow solid. The solid was recrystallized in hexane to give 1,2,3,4-tetrahydroquinoxaline in 66% yield.

### B. General Procedure for the Synthesis of Transition Metal Sulfide Catalysts

### Method A

A three-neck flask (250 ml) connected with a condensor and a hydrogen sulfide inlet tube was charged with 1,2,3,4-tetrahydroquinoxaline (15 g) and acetonitrile (100 ml) and maintained under an inert atmosphere. While stirring, the transition metal chloride (1.4 millimoles); e.g., rhenium pentachloride, ReCl₅, ammonium hexachlororuthenate, (NH₄)₂RuCl₆, molybdenum pentachloride, MoCl₅ or rhodium trichloride, RhCl₃ was added over a period of 30 minutes to prevent a sharp rise in temperature above 80°C. After stirring the mixture for an additional one hour, it was purged below the liquid surface with hydrogen sulfide for one hour at a rate of 20 ml/min. It was then stirred for 4 hours at ambient temperature. The solvent of the resulting suspension was evaporated to give 1,2,3,4-tetrahydroquinoxaline solids containing nearly 2 to 3% by weight of transition metal sulfide. The resulting mixture can be used directly for the polymerization reaction as described in Example 1 below.

### Method B

A 2-liter, single-neck flask with a large magnetic stirring bar was charged with absolute ethanol (1 L) and maintained at 55°C. With stirring lithium sulfide (12.6 g, 0.35 mol) was added slowly over a period of one-half hour. The resulting suspension was allowed to cool to room temperature. Ammonium hexachlororuthenate (35 g, 0.1 mol) was added over a period of 1.5 hours and the stirring continued for 48 hours. The resulting black suspension was separated by filtration via suction through a medium sintered glass funnel. The solids collected were washed with warm ethanol (3 times, 200 ml each) and dried at 50°C in a vacuum oven to give a black ruthenium sulfide in quantitative yield.

### Method C

To a 500 ml three-necked flask connected to a hydrogen sulfide gas inlet tubing was charged with ammonium perrhenate (13.4 g, 50 mmol), water (100 ml), and acetic acid (13.3 ml). To the resulting solution was added sodium hydroxide (approximately 3.9 g) until a pH value of 4.2 was reached. The mixture was purged with hydrogen sulfide for 0.5 hr, then heated to 50°C for 6 hr while continuing hydrogen sulfide purge (50 ml/min). After 6 hr, the black product solid was filtered out of solution by means of vacuum filtration collected on a fritted funnel and washed with hot H₂O. The solid was further soxhletted with H₂O for 24-48 hr to remove any unreacted ammonium perrhenate. The solid was then dried in a vacuum at room temperature to yield rhenium sulfides (11.5 g). Elemental analysis of the dried product best fits a composition of ReS_{3.8}O_{0.6}.3H₂O.

### Examples 1, 2 and 3

These examples describe the catalytic dehydrogenative polymerization of 1,2,3,4-tetrahydroquinoxaline. A three-neck flask (50 ml) equipped with a condensor and a magnetic stirring bar was charged with 1,2,3,4-tetrahydroquinoxaline (15 g) containing 2 to 3% by weight of the metal sulfide prepared by Method B or C described above or by a thorough mixing of the 1,2,3,4-tetrahydroquinoxaline and the metal sulfide synthesized according to Method A above. The suspended mixture was maintained under an argon atmospheric pressure and heated at 270°C for 48 hours. At the end of the reaction, the resulting product was cooled to room temperature to give a dark solid. It was transferred into a chloroform solution (15 to 25 ml per gram of product), forming a suspension which was stirred overnight at 60°C. The insoluble solid was then filtered and washed with another portion of chloroform (50 ml). The solvent of the combined chloroform solution was evaporated to give a dark brown solid. It was suspended and stirred in diethyl ether (20 to 25 ml per gram sample) for 8 hours. The insolubles were filtered and washed with diethyl ether (50 ml) to yield a brown solid polymer fraction C (PFC), which is chloroform soluble and diethyl ether insoluble. The solvent of the combined diethyl ether filtrate was evaporated to give a reddish sludge. It was then suspended and stirred in hexane (20 ml per gram of sample) for 8 hours. The insoluble solid was filtered and washed with hexane (100 ml) to yield a polymer product fraction B (PFB), which is diethyl ether soluble and hexane insoluble. The remaining hexane solubles were dried to give product fraction A (PFA).

The chloroform insolubles from the first solvent extraction were further extracted with pyridine (20 ml per gram of sample) to yield a polymer fraction D, which is pyridine soluble and chloroform insoluble. The pyridine insolubles were subsequently treated with concentrated HCL (10 ml per gram of sample) and stirred at 50°C for 12 hours. The resulting acid solution was filtered through a sintered glass frit and celite under vacuum. The collected acid solution was neutralized with NaOH to effect precipitation of a brown solid, which was then washed with distilled water and dried at 50°C under vacuum to give polymer fraction E (PFE).

The characterization of the products was performed by various spectroscopic methods. Data obtained from ¹H NMR, ¹³C NMR, IR spectra and Mass spectra were found to be consistent with the aromatic structure of polyquinoxaline.

Further details are given in Table I, which follows.

**Table I**

| Exam. | Sulfide Catalyst | % Yield PFA | % Yield PFB | % Yield PFC | % Yield PFD | % Yield PFE | % Yield Total |
|---|---|---|---|---|---|---|---|
| 1 | RuSₓ (Method A) | - | 2.0 | 4.4 | 28.4 | 62.2 | 97 |
| 2 | RuSₓ (Method B) | 3.0 | 15.1 | 1.1 | 23.5 | 57.3 | 100 |
| 3 | ReSₓ (Method C) | 1.0 | 3.1 | 10.8 | 35.4 | 47.7 | 98 |

### Example 4

This example illustrates the synthesis of quaternary polyquinoxalinium salts.

To a one-neck, round bottom flask connected with a condensor was charged with dimethyl formamide solution (100 ml) of quinoxaline oligomers (50 mmol) and dimethyl sulfate (7.6 g, 60 mmol, 1.2 equivalence). The mixture was stirred at 90° to 110°C for at least 10 hours. After being cooled to room temperature, it was added into an ether solution (600 ml) to complete the precipitation of the product. The precipitates were filtered, washed with ether and dried in vacuum to give a brownish-red solid of methyl quinoxalinium methylsulfate oligomers in 68% yield.

### Example 5

In this example, the corrosion inhibiting properties of the quaternary ammonium salt prepared in Example 4 was tested by immersing, for 24 hours, a weighed sample of 304 stainless steel in concentrated HCl containing 0.3% by weight of the quaternary polyquinoxalinium salt. The sample was removed, washed with water, dried and reweighed to determine the weight loss. For comparative purposes, another weighed sample of steel was immersed in concentrated HCl for 24 hours and the weight loss measured. The sample that was immersed in the acid containing the quaternary polyquinoxalinium salt lost 92.5% less weight.

## Claims

1. A polymer having the formula: 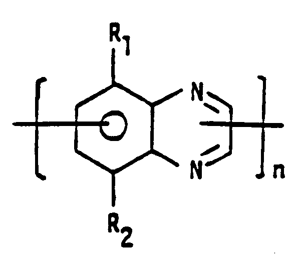 wherein R₁ and R₂ may be the same or different and are selected from hydrogen, alkyl, aryl, aralkyl and alkylaryl groups and wherein n is an integer ≧ 2.

2. A polymer as claimed in claim 1, wherein R₁ and R₂ are both hydrogen.

3. A polymer as claimed in claim 1, wherein the alkyl, aryl, aralkyl and alkaryl groups each have up to 30 carbon atoms.

4. The polymer of claim 2 wherein each alkyl group has from 1 to 24 carbon atoms.

5. A method for preparing a polymer claimed in any one of claims 1 to 4, comprising contacting a 1,2,3,4-tetrahydroquinoxaline compound of the formula 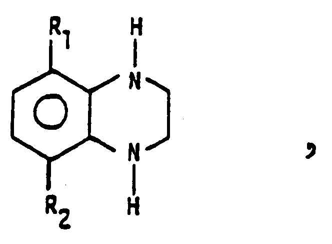 where R₁ and R₂ are as defined, with a transition metal sulfide catalyst at a temperature and for a time sufficient for the dehydrogenative polymerization of the 1,2,3,4-tetrahydroquinoxaline compound to occur.

6. A method as claimed in claim 5, wherein the transition metal sulfide includes a transition metal from Groups VIB, VIIB and VIIIB of the Periodic Table (Merck Index, 9th Edition).

7. A method as claimed in claim 5 or 6, wherein the temperature of contacting is from 180°C to 300°C.

8. A method as claimed in any one of claims 5 to 7, wherein the contacting is for a time of from 12 to 96 hrs.

9. A quaternary salt having the formula: 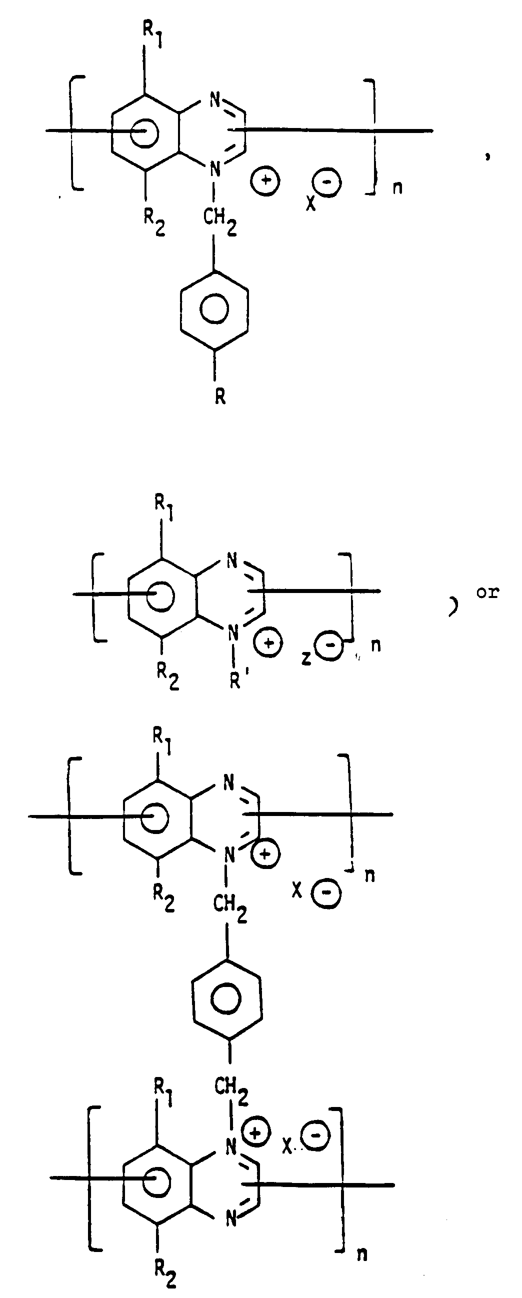 wherein R is hydrogen or an alkyl group having from 1 to 20 carbon atoms, R₁ and R₂ may be the same or different and are selected from hydrogen, alkyl, aryl, aralkyl and alkaryl groups, n is an integer ≧ 2, and R' is an alkyl group of from 1 to 20 carbon atoms, X⁻ is bromide, iodide or chloride and z⁻ is an anion selected from R'SO₄⁻, BF₄⁻, ClO₄⁻, and PF₆⁻, where R' is said alkyl group.

10. A quaternary salt as claimed in claim 9, wherein R' is methyl and z⁻ is CH₃SO₄⁻.

## Patentansprüche

1. Polymer mit der Formel 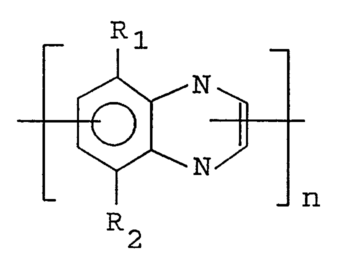 , in der R₁ und R₂ gleich oder unterschiedlich sein können und ausgewählt sind aus Wasserstoff, Alkyl, Aryl, Aralkyl und Alkarylgruppen und in der n eine ganze Zahl ≧ 2 ist.

2. Polymer nach Anspruch 1, bei dem sowohl R₁ als auch R₂ Wasserstoff sind.

3. Polymer nach Anspruch 1, bei dem die Alkyl-, Aryl-, Aralkyl- und Alkarylgruppen jeweils bis zu 30 Kohlenstoffatome aufweisen.

4. Polymer nach Anspruch 2, bei dem jede Alkylgruppe 1 bis 24 Kohlenstoffatome aufweist.

5. Verfahren zur Herstellung eines Polymers gemäß einem der Ansprüche 1 bis 4, bei dem eine 1,2,3,4-Tetrahydrochinoxalinverbindung mit der Formel 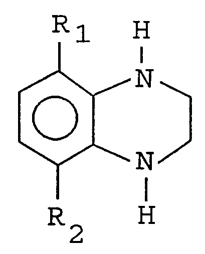 , wobei R₁ und R₂ wie oben definiert sind, mit einem Übergangsmetallsulfidkatalysator bei einer ausreichenden Temperatur und für eine ausreichende Zeitdauer kontaktiert wird, so daß die dehydrierende Polymerisation der 1,2,3,4-Tetrahydrochinoxalinverbindung erfolgt.

6. Verfahren nach Anspruch 5, bei dem das Übergangsmetallsulfid ein Übergangsmetall aus den Gruppen VIB, VIIB und VIIIB des Periodensystems (Merck Index, 9. Ausgabe) einschließt.

7. Verfahren nach Anspruch 5 oder 6, bei dem die Kontaktierungstemperatur 180°C bis 300°C beträgt.

8. Verfahren nach einem der Ansprüche 5 bis 7, bei dem das Kontaktieren 12 bis 96 Stunden dauert.

9. Quartäres Salz mit der Formel 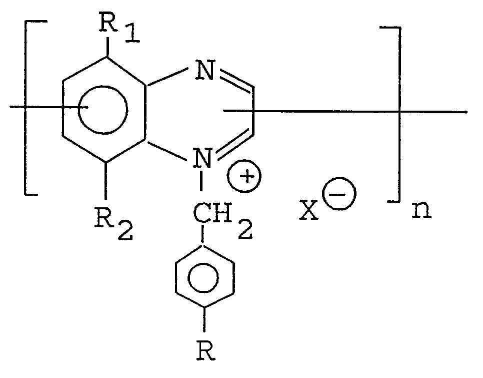 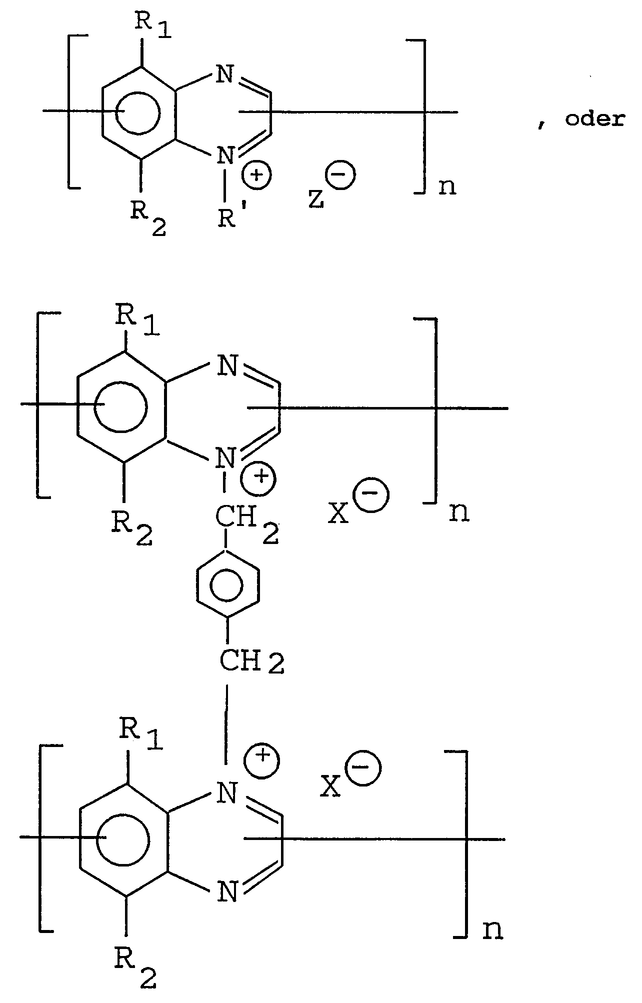 , in der R Wasserstoff oder eine Alkylgruppe mit 1 bis 20 Kohlenstoffatomen ist, R₁ und R₂ gleich oder unterschiedlich sein können und ausgewählt sind aus Wasserstoff, Alkyl-, Aryl-, Aralkyl- und Alkarylgruppen, n eine ganze Zahl ≧ 2 ist und R' eine Alkylgruppe mit 1 bis 20 Kohlenstoffatomen ist, X⁻ Bromid, Iodid oder Chlorid ist und z⁻ ein Anion ausgewählt aus R'SO₄⁻, BF₄⁻, ClO₄⁻ und PF₆⁻ ist, wobei R' die Alkylgruppe ist.

10. Quartäres Salz nach Anspruch 9, bei dem R' Methyl ist und z⁻ CH₃SO₄⁻ ist.

## Revendications

1. Polymère de formule: 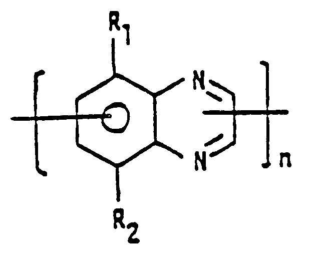 dans laquelle R₁ et R₂ peuvent être identiques ou différents et sont choisis parmi l'hydrogène et les groupes alkyle, aryle, aralkyle et alkylaryle, et dans laquelle n est un nombre entier ≧ 2.

2. Polymère selon la revendication 1, dans lequel R₁ et R₂ sont tous deux de l'hydrogène.

3. Polymère selon la revendication 1, dans lequel les groupes alkyle, aryle, aralkyle et alkylaryle ont chacun jusqu'à 30 atomes de carbone.

4. Polymère selon la revendication 2, dans lequel chaque groupe alkyle a de 1 à 24 atomes de carbone.

5. Procédé de préparation d'un polymère selon l'une quelconque des revendications 1 à 4, comprenant la mise en contact d'un composé de 1,2,3,4-tétrahydroquinoxaline de formule: 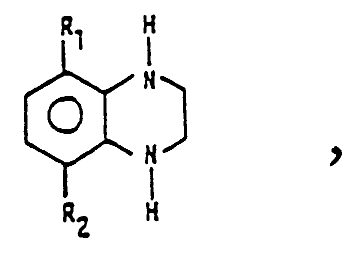 dans laquelle R₁ et R₂ sont tels que définis, avec un catalyseur de sulfure de métal de transition à une température et pendant une période suffisantes pour que se produise la polymérisation par déshydrogénation du composé de 1,2,3,4-tétrahydroquinoxaline.

6. Procédé selon la revendication 5, dans lequel le sulfure de métal de transition comprend un métal de transition des groupes VIB, VIIB et VIIIB du Tableau Périodique des Eléments (Merck Index, 9ème édition).

7. Procédé selon la revendication 5 ou 6, dans lequel la température de mise en contact est de 180 à 300°C.

8. Procédé selon l'une quelconque des revendications 5 à 7, dans lequel la mise en contact se fait pendant une période de 12 à 96 heures.

9. Sel quaternaire de formule: 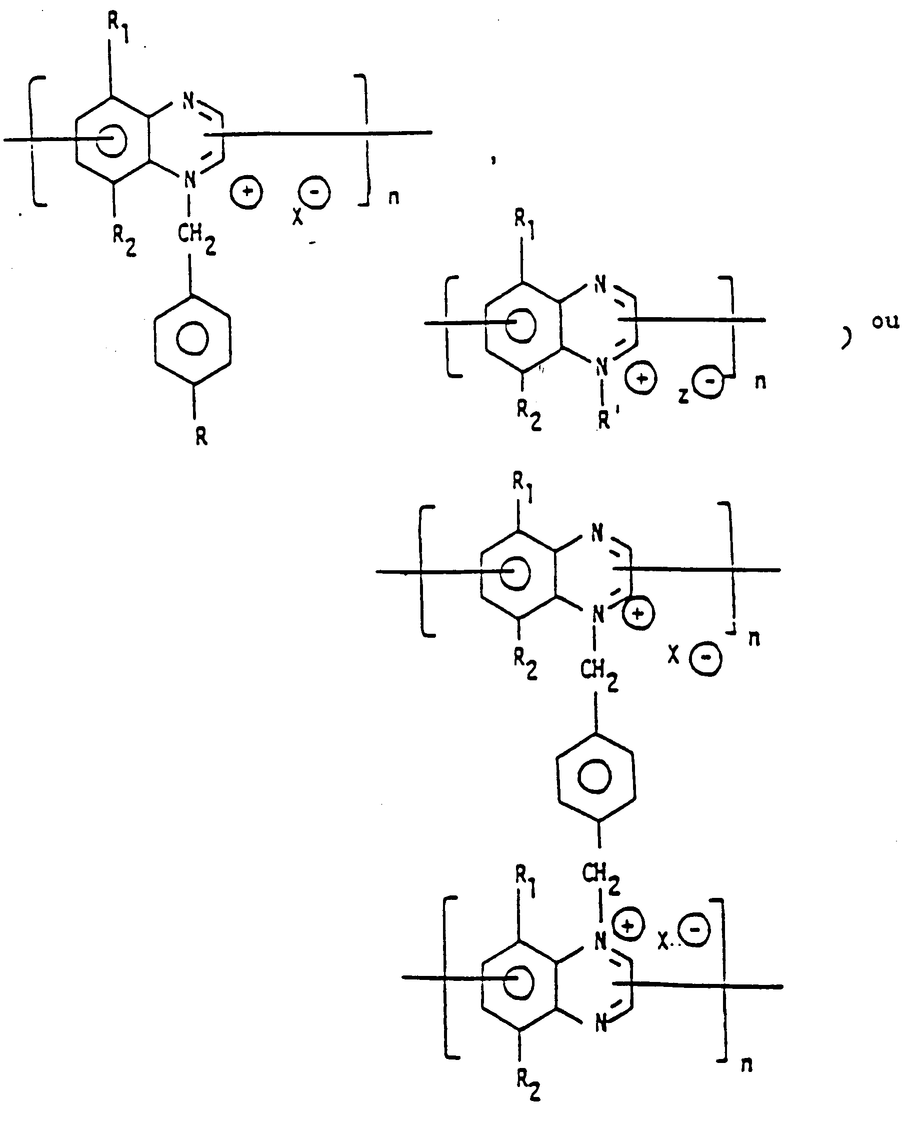 dans laquelle R est de l'hydrogène ou un groupe alkyle ayant 1 à 20 atomes de carbone, R₁ et R₂ peuvent être identiques ou différents et sont choisis parmi l'hydrogène et les groupes alkyle, aryle, aralkyle et alkylaryle, n est un nombre entier ≧ 2, et R' est un groupe alkyle de 1 à 20 atomes de carbone, X⁻ est du bromure, de l'iodure ou du chlorure et z⁻ est un anion choisi parmi R'SO₄⁻, BF₄⁻, ClO₄⁻ et PF₆⁻, où R' est ledit groupe alkyle.

10. Sel quaternaire selon la revendication 9, dans lequel R' est un groupe méthyle et z⁻ est CH₃SO₄⁻.
